# EUROPEAN PATENT APPLICATION

(11) **EP 4 432 133 A1**
(43) Date of publication of application: **18.09.2024**
(21) Application number: 22946506.7
(22) Date of filing: 26.09.2022
(51) Int. Cl.: G06F 16/9535, G06F 16/75

(54) **INFORMATION RECOMMENDATION METHOD AND APPARATUS, ELECTRONIC DEVICE, AND MEDIUM**

(30) Priority: 15.06.2022 CN 202210680752
(71) Applicant: Beijing Baidu Netcom Science Technology Co., Ltd., Beijing 100085 (CN)
(72) Inventor: LI, Gonghui, Beijing 100085 (CN); ZHAO, Lunan, Beijing 100085 (CN); QIN, Shouke, Beijing 100085 (CN); MA, Xiaolong, Beijing 100085 (CN); LI, Kun, Beijing 100085 (CN)
(74) Representative: Laqua, Bernd Christian Kurt
(86) International application number: PCT/CN2022/121332
(87) International publication number: WO 2023/240833

(57) **Abstract**

The present disclosure provides an information recommendation method and apparatus, an electronic device, a computer-readable storage medium, and a computer program product, relates to the field of computers, and in particular, to the field of intelligent recommendation technologies. An implementation solution is: obtaining a list of browsed information of each of a plurality of first users and a first vector corresponding to each list of browsed information; clustering the first vectors corresponding to the plurality of first users, to obtain one or more vector clusters and a center vector of each vector cluster; determining one or more information clusters respectively corresponding to the one or more vector clusters; obtaining a list of browsed information of a second user in response to a browsing request of the second user; determining, in response to determining that the list of browsed information of the second user is not empty, a second vector corresponding to the list of browsed information of the second user; calculating a similarity between the second vector and each center vector, to determine an information cluster matched with the second vector; and providing recommendations for the second user based on the determined information cluster.

## Description

### CROSS-REFERENCE TO RELATED APPLICATIONS

The present application claims priority to Chinese Patent Application No. 202210680752.1 filed on June 15, 2022, which is incorporated herein by reference in its entirety.

### Technical Field

The present disclosure relates to the field of computers, in particular to the field of intelligent recommendation technologies, and specifically to an information recommendation method and apparatus, an electronic device, a computer-readable storage medium, and a computer program product.

### Background Art

With the development of Internet technologies, the Internet has become an indispensable part of people's lives, and people's consumption, entertainment, learning, travel, and financing are all inseparable from the Internet. When a user browses and jumps in different scenarios, there is no unified recall based on a style of the user at a recall level, such that resources at the recall level may have inconsistent styles, which cannot provide the user with an immersive information consumption experience.

### Summary of the Invention

The present disclosure provides an information recommendation method and apparatus, an electronic device, a computer-readable storage medium, and a computer program product.

According to an aspect of the present disclosure, there is provided an information recommendation method, including: obtaining a list of browsed information of each of a plurality of first users and a first vector corresponding to each list of browsed information; clustering the first vectors corresponding to the plurality of first users, to obtain one or more vector clusters and a center vector of each vector cluster; determining one or more information clusters respectively corresponding to the one or more vector clusters, where each information cluster is determined based on a list of browsed information corresponding to a first vector in the vector cluster that corresponds to the information cluster; obtaining a list of browsed information of a second user in response to a browsing request of the second user; determining, in response to determining that the list of browsed information of the second user is not empty, a second vector corresponding to the list of browsed information of the second user; calculating a similarity between the second vector and each center vector, to determine an information cluster matched with the second vector; and providing recommendations for the second user based on the determined information cluster.

According to another aspect of the present disclosure, there is provided an information recommendation apparatus, including: a first obtaining unit configured to obtain a list of browsed information of each of a plurality of first users and a first vector corresponding to each list of browsed information; a clustering unit configured to cluster the first vectors corresponding to the plurality of first users, to obtain one or more vector clusters and a center vector of each vector cluster; a first determining unit configured to determine one or more information clusters respectively corresponding to the one or more vector clusters, where each information cluster is determined based on a list of browsed information corresponding to a first vector in the vector cluster that corresponds to the information cluster; a second obtaining unit configured to obtain a list of browsed information of a second user in response to a browsing request of the second user; a second determining unit configured to determine, in response to determining that the list of browsed information of the second user is not empty, a second vector corresponding to the list of browsed information of the second user; a third determining unit configured to calculate a similarity between the second vector and each center vector, to determine an information cluster matched with the second vector; and a recommendation unit configured to provide recommendations for the second user based on the determined information cluster.

According to another aspect of the present disclosure, there is provided an electronic device, including: at least one processor; and a memory communicatively connected to the at least one processor, where the memory stores instructions executable by the at least one processor, and when executed by the at least one processor, the instructions cause the at least one processor to perform the method according to the present disclosure.

According to another aspect of the present disclosure, there is provided a non-transitory computer-readable storage medium storing computer instructions, where the computer instructions are used to cause a computer to perform the method according to the present disclosure.

According to another aspect of the present disclosure, there is provided a computer program product including a computer program, where when the computer program is executed by a processor, the method according to the present disclosure is implemented.

According to one or more embodiments of the present disclosure, the vectors corresponding to the browsed information of the users are clustered, and a similarity between a vector corresponding to browsed information of a current browsing user and a center vector obtained by the clustering is calculated, which provides the current user with an immersive information consumption experience, maintains the rhythm and smoothness of overall information consumption, and improves user experience.

It should be understood that the content described in this section is not intended to identify critical or important features of the embodiments of the present disclosure, and is not used to limit the scope of the present disclosure. Other features of the present disclosure will be easily understood through the following description.

### Brief Description of the Drawings

The accompanying drawings exemplarily show embodiments and form a part of the specification, and are used to explain exemplary implementations of the embodiments together with a written description of the specification. The embodiments shown are merely for illustrative purposes and do not limit the scope of the claims. Throughout the accompanying drawings, the same reference numerals denote similar but not necessarily same elements.
FIG. 1 is a schematic diagram of an exemplary system in which various methods described herein can be implemented according to an embodiment of the present disclosure;
FIG. 2 is a flowchart of an information recommendation method according to an embodiment of the present disclosure;
FIG. 3 is a schematic diagram of an information browsing page according to an embodiment of the present disclosure;
FIG. 4 is a structural block diagram of an information recommendation apparatus according to an embodiment of the present disclosure; and
FIG. 5 is a structural block diagram of an exemplary electronic device that can be used to implement an embodiment of the present disclosure.

### Detailed Description of Embodiments

Exemplary embodiments of the present disclosure are described below in conjunction with the accompanying drawings, where various details of the embodiments of the present disclosure are included to facilitate understanding, and should only be considered as exemplary. Therefore, those of ordinary skill in the art should be aware that various changes and modifications can be made to the embodiments described herein, without departing from the scope of the present disclosure. Likewise, for clarity and conciseness, the description of well-known functions and structures is omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, there may be one or more elements, unless otherwise expressly indicated in the context. Moreover, the term "and/or" used in the present disclosure encompasses any of and all possible combinations of listed items.

The embodiments of the present disclosure will be described below in detail with reference to the accompanying drawings.

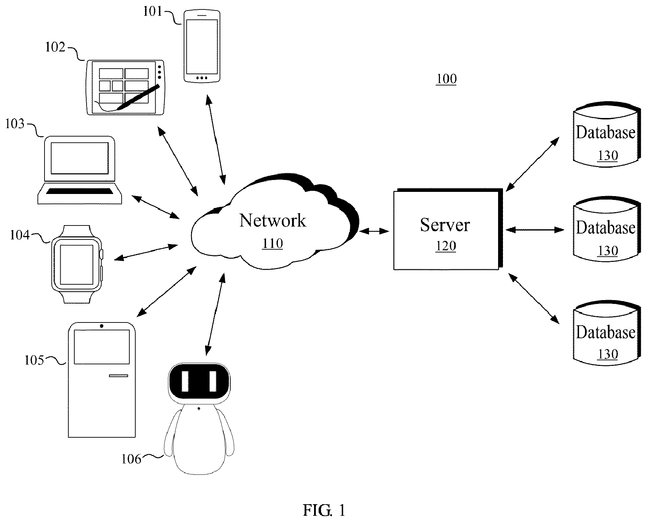

FIG. 1 is a schematic diagram of an exemplary system 100 in which various methods and apparatuses described herein can be implemented according to an embodiment of the present disclosure. Referring to FIG. 1, the system 100 includes one or more client devices 101, 102, 103, 104, 105, and 106, a server 120, and one or more communications networks 110 that couple the one or more client devices to the server 120. The client devices 101, 102, 103, 104, 105, and 106 may be configured to execute one or more applications.

In an embodiment of the present disclosure, the server 120 can run one or more services or software applications that enable an information recommendation method to be performed.

In some embodiments, the server 120 may further provide other services or software applications that may include a non-virtual environment and a virtual environment. In some embodiments, these services may be provided as web-based services or cloud services, for example, provided to a user of the client device 101, 102, 103, 104, 105, and/or 106 in a software as a service (SaaS) model.

In the configuration shown in FIG. 1, the server 120 may include one or more components that implement functions performed by the server 120. These components may include software components, hardware components, or a combination thereof that can be executed by one or more processors. A user operating the client device 101, 102, 103, 104, 105, and/or 106 may sequentially use one or more client application programs to interact with the server 120, to use the services provided by these components. It should be understood that various different system configurations are possible, and may be different from that of the system 100. Therefore, FIG. 1 is an example of the system for implementing various methods described herein, and is not intended to be limiting.

The user may use the client device 101, 102, 103, 104, 105, and/or 106 to browse corresponding information. The client device may provide an interface that enables the user of the client device to interact with the client device. The client device may also output information to the user via the interface. Although FIG. 1 shows only six client devices, those skilled in the art will understand that any number of client devices are supported in the present disclosure.

The client device 101, 102, 103, 104, 105, and/or 106 may include various types of computer devices, such as a portable handheld device, a general-purpose computer (such as a personal computer and a laptop computer), a workstation computer, a wearable device, a smart screen device, a self-service terminal device, a service robot, a gaming system, a thin client, various messaging devices, and a sensor or other sensing devices. These computer devices can run various types and versions of software application programs and operating systems, such as MICROSOFT Windows, APPLE iOS, a UNIX-like operating system, and a Linux or Linux-like operating system (e.g., GOOGLE Chrome OS); or include various mobile operating systems, such as MICROSOFT Windows Mobile OS, iOS, Windows Phone, and Android. The portable handheld device may include a cellular phone, a smartphone, a tablet computer, a personal digital assistant (PDA), etc. The wearable device may include a head-mounted display (such as smart glasses) and other devices. The gaming system may include various handheld gaming devices, Internet-enabled gaming devices, etc. The client device can execute various different application programs, such as various Internet-related application programs, communication application programs (e.g., email application programs), and short message service (SMS) application programs, and can use various communication protocols.

The network 110 may be any type of network well known to those skilled in the art, and may use any one of a plurality of available protocols (including but not limited to TCP/IP, SNA, IPX, etc.) to support data communication. As a mere example, the one or more networks 110 may be a local area network (LAN), an Ethernet-based network, a token ring, a wide area network (WAN), the Internet, a virtual network, a virtual private network (VPN), an intranet, an extranet, a blockchain network, a public switched telephone network (PSTN), an infrared network, a wireless network (such as Bluetooth or Wi-Fi), and/or any combination of these and/or other networks.

The server 120 may include one or more general-purpose computers, a dedicated server computer (e.g., a personal computer (PC) server, a UNIX server, or a terminal server), a blade server, a mainframe computer, a server cluster, or any other suitable arrangement and/or combination. The server 120 may include one or more virtual machines running a virtual operating system, or other computing architectures related to virtualization (e.g., one or more flexible pools of logical storage devices that can be virtualized to maintain virtual storage devices of a server). In various embodiments, the server 120 can run one or more services or software applications that provide functions described below.

A computing unit in the server 120 can run one or more operating systems including any one of the above operating systems and any commercially available server operating system. The server 120 can also run any one of various additional server application programs and/or middle-tier application programs, including an HTTP server, an FTP server, a CGI server, a JAVA server, a database server, etc.

In some implementations, the server 120 may include one or more applications to analyze and merge data feeds and/or event updates received from users of the client devices 101, 102, 103, 104, 105, and 106. The server 120 may further include one or more applications to display the data feeds and/or real-time events via one or more display devices of the client devices 101, 102, 103, 104, 105, and 106.

In some implementations, the server 120 may be a server in a distributed system, or a server combined with a blockchain. The server 120 may alternatively be a cloud server, or an intelligent cloud computing server or intelligent cloud host with artificial intelligence technologies. The cloud server is a host product in a cloud computing service system, to overcome the shortcomings of difficult management and weak service scalability in conventional physical host and virtual private server (VPS) services.

The system 100 may further include one or more databases 130. In some embodiments, these databases can be used to store data and other information. For example, one or more of the databases 130 can be used to store, for example, information to be recommended. The databases 130 may reside in various locations. For example, a database used by the server 120 may be locally in the server 120, or may be remote from the server 120 and may communicate with the server 120 via a network-based or dedicated connection. The database 130 may be of different types. In some embodiments, the database used by the server 120 may be, for example, a relational database. One or more of these databases can store, update, and retrieve data from or to the database, in response to a command.

In some embodiments, one or more of the databases 130 may also be used by an application to store application data. The database used by the application may be of different types, for example, may be a key-value repository, an object repository, or a regular repository backed by a file system.

The system 100 of FIG. 1 may be configured and operated in various manners, such that the various methods and apparatuses described according to the present disclosure can be applied.

In a recommendation system, there are generally three phases: recall, ranking, and fusion. In the recall phase, a recall is performed mainly based on different dimensions such as user relevance, information popularity, local sensitivity, etc. In the ranking phase, scoring and ranking are performed by using clicks, interactions, duration, etc. as the targets. In the final fusion phase, diversified and context-based overall adjustment of sequences is performed.

For a user, overall browsed information of the user is overall perception based on history and context. In addition to a specific piece of current information, both the preceding and following information and historical information that the user has browsed have a strong user perception. Especially, in different scenarios, a perception of an overall style is stronger. For example, in a second-jump scenario of an information flow, the user clicks one piece of information to enter a second-jump channel. This channel mainly provides the user with an immersive consumption experience, is more focused on the rhythm and smoothness of overall consumption, and is therefore more focused on an overall style in the immersive consumption.

At present, in the ranking phase, ranking of the overall style is performed by using clicks, duration, or interactions as the targets. However, there is no unified recall based on the style of the user in the recall phase, which makes information styles in the recall phase inconsistent, making it difficult to unify the styles in the subsequent ranking phase. Therefore, how to carry out an information recall with a unified style becomes the key.

Therefore, according to an embodiment of the present disclosure, there is provided an information recommendation method, including: obtaining a list of browsed information of each of a plurality of first users and a first vector corresponding to each list of browsed information; clustering the first vectors corresponding to the plurality of first users, to obtain one or more vector clusters and a center vector of each vector cluster; determining one or more information clusters respectively corresponding to the one or more vector clusters, where each information cluster is determined based on a list of browsed information corresponding to a first vector in the vector cluster that corresponds to the information cluster; obtaining a list of browsed information of a second user in response to a browsing request of the second user; determining, in response to determining that the list of browsed information of the second user is not empty, a second vector corresponding to the list of browsed information of the second user; calculating a similarity between the second vector and each center vector, to determine an information cluster matched with the second vector; and providing recommendations for the second user based on the determined information cluster.

According to this embodiment of the present disclosure, the vectors corresponding to the browsed information of the users are clustered, and a similarity between a vector corresponding to browsed information of a current browsing user and a center vector obtained by the clustering is calculated, which provides the current user with an immersive information consumption experience, maintains the rhythm and smoothness of overall information consumption, and improves user experience.

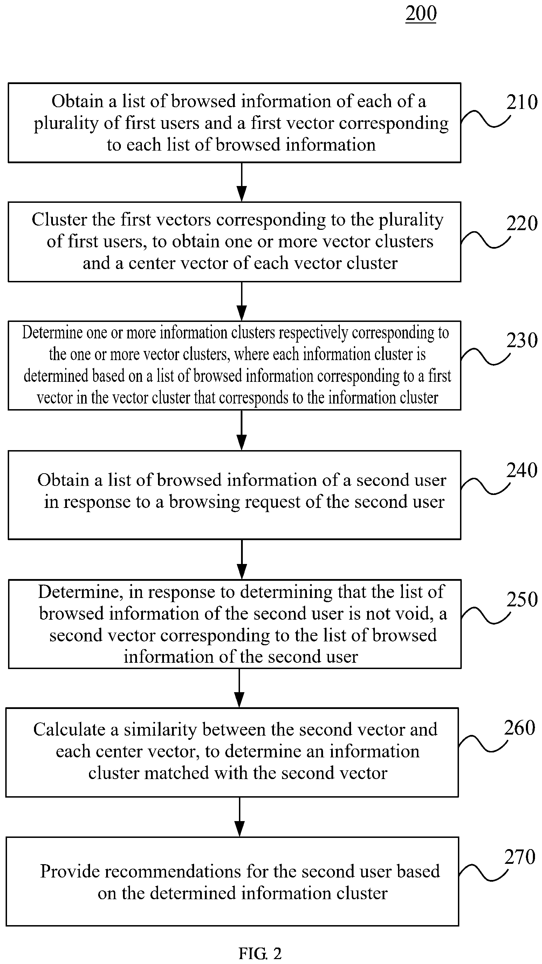

FIG. 2 is a flowchart of an information recommendation method according to an embodiment of the present disclosure. As shown in FIG. 2, in step 210, a list of browsed information of each of a plurality of first users and a first vector corresponding to each list of browsed information are obtained.

According to some embodiments, the first users are active users, and the active users may be determined based on the following steps: sorting users in descending order of numbers of pieces of information that have been browsed by the users within a preset time period, to determine a top preset percentage of users as the first users.

In the present disclosure, information to be recommended may include, but is not limited to, contents such as pictures, texts, videos, and commodities. In some examples, the information to be recommended may belong to different information categories, such as entertainment, news, and sports. Therefore, an active user may be selected from each of the different categories to be determined as the corresponding first user. Specifically, users under each category are sorted in descending order of numbers of pieces of information that have been browsed by the users within a predetermined time period, and a top preset percentage (for example, 5%) of users are determined as the first users.

It can be understood that other methods for determining the first users are also possible. For example, a user whose number of pieces of information that have been browsed by the user within a predetermined time period exceeds a preset threshold may be determined as the first user, which is not limited herein.

According to some embodiments, the list of browsed information includes an information identifier of information that has been browsed by a corresponding user. Therefore, a vector representation corresponding to a set of information identifiers that corresponds to each user can be determined based on the set of information identifiers.

In some embodiments, a vector corresponding to a list of browsed information can be obtained by using a pre-trained model. As an example, a two-tower model to be trained is set, information browsed by the same user is randomly divided into two groups to be respectively input into the two towers as positive samples. Information browsed by different users is input into the two towers as negative samples. Parameters of the two towers are shared, so as to train the two-tower model that is to output a vector corresponding to a list of browsed information.

It can be understood that other methods for obtaining a vector corresponding to a list of browsed information are also possible, which are not limited herein.

In step 220, the first vectors corresponding to the plurality of first users are clustered, to obtain one or more vector clusters and a center vector of each vector cluster.

In the example described above where the information to be recommended belongs to different information categories, vectors corresponding to a plurality of first users under each information category may be clustered, respectively. Specifically, vectors corresponding to browsing lists of active users under an entertainment category may be clustered, to obtain one or more clusters and a center vector corresponding to each cluster. A similar method is used for the other information categories and will not be repeated herein.

In some examples, vectors corresponding to first users under a plurality of information categories may be clustered at a time, which is not limited herein. In addition, in the present disclosure, the first vectors may be clustered by using any suitable algorithm, including but not limited to the Kmeans algorithm.

In step 230, one or more information clusters respectively corresponding to the one or more vector clusters are determined, where each information cluster is determined based on a list of browsed information corresponding to a first vector in the vector cluster that corresponds to the information cluster.

In some examples, after the first vectors corresponding to the plurality of first users are clustered, the one or more vector clusters are obtained, and each vector cluster corresponds to one or more first vectors. Moreover, each first vector corresponds to a set of browsing list of a first user, so that one or more information clusters respectively corresponding to the one or more vector clusters can be determined based on the browsing list of the first user that corresponds to the first vector.

In step 240, a list of browsed information of a second user is obtained in response to a browsing request of the second user. In step 250, a second vector corresponding to the list of browsed information of the second user is determined in response to determining that the list of browsed information of the second user is not empty.

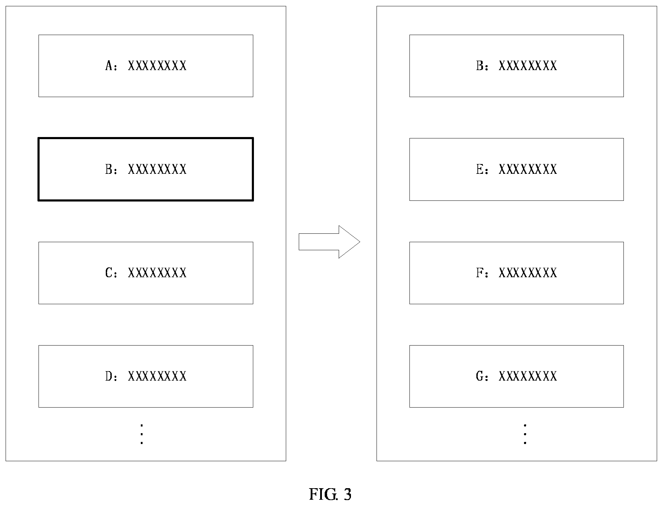

As an example, the browsing request of the second user may be a browsing operation (such as a sliding operation on a touch screen) of the user, a jump operation after clicking a specific piece of information, etc. As shown in FIG. 3, the user browses information A, B, C, D... in a browsing page, and clicks the information B to trigger a page jump based on the information B, so as to jump to a browsing page including the information B, E, F, G...

To provide the user with an immersive information consumption experience on the page after the jump, and to maintain the rhythm and smoothness of overall information consumption, after the browsing request of the user is received, it is necessary to recall information with a more consistent overall style to improve user experience.

To recall information with a more consistent overall style, specifically, in step 260, a similarity between the second vector and each center vector is calculated, to determine an information cluster matched with the second vector. In addition, in step 270, recommendations are provided for the second user based on the determined information cluster.

In the present disclosure, a similarity between the second vector and a center vector of a cluster obtained by clustering can be calculated by using any suitable algorithm, including but not limited to, for example, the annoy algorithm, so as to determine one or more clusters closest to the second vector.

In the example described above where the information to be recommended belongs to different information categories, a similarity between the second vector and the center vector of each cluster under all the information categories can be calculated, to determine, from the clusters corresponding to all the information categories, an information cluster matched with the second vector.

In some examples, the information cluster matched with the second vector may be a cluster whose similarity is greater than a preset threshold, or may be a preset number of clusters with a maximum similarity, which is not limited herein.

According to some embodiments, the providing recommendations for the second user based on the determined information cluster may include: obtaining the list of browsed information of the first user that corresponds to the determined information cluster; and determining, based on the obtained list of browsed information of the first user, a predetermined number of pieces of information that have been browsed a maximum number of times, to provide recommendations for the second user based on the predetermined number of pieces of information.

Specifically, it is assumed that, in the determined information cluster, a list of browsed information of a first user A is {A1, A2, A3, A4}, a list of browsed information of a first user B is {A1, A2, B1, B2}, and a list of browsed information of a first user C is {B1, A2, B3, B4}. After statistics on the lists of browsed information of the first users A, B, and C corresponding to the information cluster are collected, it can be determined that the information A1 has been browsed two times, the information A2 has been browsed three times, the information B 1 has been browsed two times, and the other information has been browsed once. Therefore, after statistics on the browsed information of all the first users in the determined information cluster are collected, a predetermined number of pieces of information that have been browsed a maximum number of times can be determined, to provide recommendations for the second user based on the predetermined number of pieces of information.

According to some embodiments, the method according to the present disclosure may further include: determining, in response to determining that the list of browsed information corresponding to the second user is empty, the number of information browsing times that corresponds to each of the one or more information clusters; and determining an information cluster with a maximum number of information browsing times, to provide recommendations for the second user based on the determined information cluster.

When the list of browsed information corresponding to the second user is empty (for example, the second user is a new user), information in the most active cluster may be directly recommended to the user. Specifically, the number of information browsing times that corresponds to each information cluster can be determined using the above method. For example, if a specific information cluster includes information A1, B1, ..., N1, and it is statistically determined that the information A1 has been browsed a times in total, the information B1 has been browsed b times in total, ..., and the information N1 has been browsed c times in total, the number of times information has been browsed that corresponds to the information cluster is a+b+...+c. Therefore, recommendations are provided for the second user based on an information cluster, with a maximum number of information browsing times, determined from the one or more information clusters.

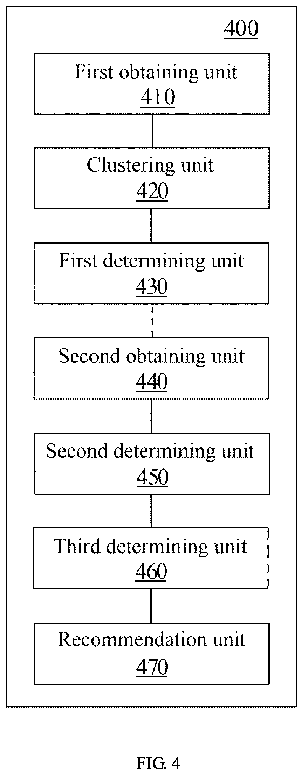

According to an embodiment of the present disclosure, as shown in FIG. 4, there is further provided an information recommendation apparatus 400, including: a first obtaining unit 410 configured to obtain a list of browsed information of each of a plurality of first users and a first vector corresponding to each list of browsed information; a clustering unit 420 configured to cluster the first vectors corresponding to the plurality of first users, to obtain one or more vector clusters and a center vector of each vector cluster; a first determining unit 430 configured to determine one or more information clusters respectively corresponding to the one or more vector clusters, where each information cluster is determined based on a list of browsed information corresponding to a first vector in the vector cluster that corresponds to the information cluster; a second obtaining unit 440 configured to obtain a list of browsed information of a second user in response to a browsing request of the second user; a second determining unit 450 configured to determine, in response to determining that the list of browsed information of the second user is not empty, a second vector corresponding to the list of browsed information of the second user; a third determining unit 460 configured to calculate a similarity between the second vector and each center vector, to determine an information cluster matched with the second vector; and a recommendation unit 470 configured to provide recommendations for the second user based on the determined information cluster.

Herein, the operations of the unit 410 to the unit 470 of the information recommendation apparatus 400 are respectively similar to the operations of steps 210 to 270 described above, and details are not described herein again.

In the technical solutions of the present disclosure, collection, storage, use, processing, transmission, provision, disclosure, etc. of user personal information involved all comply with related laws and regulations and are not against the public order and good morals.

According to the embodiments of the present disclosure, an electronic device, a readable storage medium, and a computer program product are further provided.

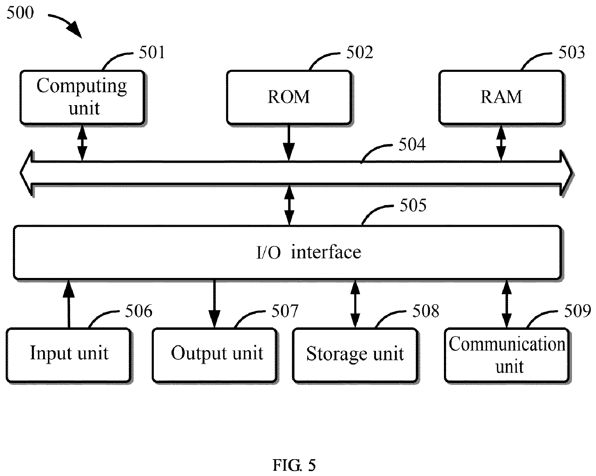

Referring to FIG. 5, a structural block diagram of an electronic device 500 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in FIG. 5, the electronic device 500 includes a computing unit 501. The computing unit may perform various appropriate actions and processing according to a computer program stored in a read-only memory (ROM) 502 or a computer program loaded from a storage unit 508 to a random access memory (RAM) 503. The RAM 503 may further store various programs and data required for the operation of the electronic device 500. The computing unit 501, the ROM 502, and the RAM 503 are connected to each other through a bus 504. An input/output (I/O) interface 505 is also connected to the bus 504.

A plurality of components in the electronic device 500 are connected to the I/O interface 505, including: an input unit 506, an output unit 507, the storage unit 508, and a communication unit 509. The input unit 506 may be any category of device capable of entering information to the electronic device 500. The input unit 506 may receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 507 may be any category of device capable of presenting information, and may include, but is not limited to, a display, a speaker, a video/audio output terminal, a vibrator, and/or a printer. The storage unit 508 may include, but is not limited to, a magnetic disk and an optical disk. The communications unit 509 allows the electronic device 500 to exchange information/data with other devices via a computer network such as the Internet and/or various telecommunications networks, and may include, but is not limited to, a modem, a network interface card, an infrared communications device, a wireless communications transceiver, and/or a chipset, for example, a Bluetooth^{™} device, an 802.11 device, a WiFi device, a WiMax device, or a cellular communications device.

The computing unit 501 may be various general-purpose and/or special-purpose processing components with processing and computing capabilities. Some examples of the computing unit 501 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 501 performs the various methods and processing described above, for example, the method 200. For example, in some embodiments, the method 200 may be implemented as a computer software program, which is tangibly contained in a machine-readable medium, such as the storage unit 508. In some embodiments, a part or all of the computer program may be loaded and/or installed onto the electronic device 500 via the ROM 502 and/or the communication unit 509. When the computer program is loaded onto the RAM 503 and executed by the computing unit 501, one or more steps of the method 200 described above can be performed. Alternatively, in other embodiments, the computing unit 501 may be configured, by any other suitable means (for example, by means of firmware), to perform the method 200.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: The systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program codes used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other categories of apparatuses can also be used to provide interaction with the user; for example, feedback provided to the user can be any form of sensory feedback (for example, visual feedback, auditory feedback, or tactile feedback), and an input from the user can be received in any form (including an acoustic input, a voice input, or a tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), the Internet, and a blockchain network.

A computer system may include a client and a server. The client and the server are generally far away from each other and usually interact through a communications network. A relationship between the client and the server is generated by computer programs running on respective computers and having a client-server relationship with each other. The server may be a cloud server, a server in a distributed system, or a server combined with a blockchain.

It should be understood that steps may be reordered, added, or deleted based on the various forms of procedures shown above. For example, the steps recorded in the present disclosure may be performed in parallel, in order, or in a different order, provided that the desired result of the technical solutions disclosed in the present disclosure can be achieved, which is not limited herein.

Although the embodiments or examples of the present disclosure have been described with reference to the accompanying drawings, it should be appreciated that the method, system, and device described above are merely exemplary embodiments or examples, and the scope of the present invention is not limited by the embodiments or examples, but defined only by the granted claims and the equivalent scope thereof. Various elements in the embodiments or examples may be omitted or substituted by equivalent elements thereof. Moreover, the steps may be performed in an order different from that described in the present disclosure. Further, various elements in the embodiments or examples may be combined in various ways. It is important that, as the technology evolves, many elements described herein may be replaced with equivalent elements that appear after the present disclosure.

## Claims

1. An information recommendation method, comprising:
obtaining a list of browsed information of each of a plurality of first users and a first vector corresponding to each list of browsed information;
clustering the first vectors corresponding to the plurality of first users, to obtain one or more vector clusters and a center vector of each vector cluster;
determining one or more information clusters respectively corresponding to the one or more vector clusters, wherein each information cluster is determined based on a list of browsed information corresponding to a first vector in the vector cluster that corresponds to the information cluster;
obtaining a list of browsed information of a second user in response to a browsing request of the second user;
determining, in response to determining that the list of browsed information of the second user is not empty, a second vector corresponding to the list of browsed information of the second user;
calculating a similarity between the second vector and each center vector, to determine an information cluster matched with the second vector; and
providing recommendations for the second user based on the determined information cluster.

2. The method according to claim 1, wherein the providing recommendations for the second user based on the determined information cluster comprises:
obtaining the list of browsed information of the first user that corresponds to the determined information cluster; and
determining, based on the obtained list of browsed information of the first user, a predetermined number of pieces of information that have been browsed a maximum number of times, to provide recommendations for the second user based on the predetermined number of pieces of information.

3. The method according to claim 1, wherein the first user is determined based on the following steps: sorting users in descending order of numbers of pieces of information that have been browsed by the users within a preset time period, to determine a top preset percentage of users as the first users.

4. The method according to claim 1, further comprising:
determining, in response to determining that the list of browsed information corresponding to the second user is empty, the number of information browsing times that corresponds to each of the one or more information clusters; and
determining an information cluster with a maximum number of information browsing times, to provide recommendations for the second user based on the determined information cluster.

5. The method according to claim 1, wherein the list of browsed information comprises an information identifier of information that has been browsed by a corresponding user.

6. An information recommendation apparatus, comprising:
a first obtaining unit configured to obtain a list of browsed information of each of a plurality of first users and a first vector corresponding to each list of browsed information;
a clustering unit configured to cluster the first vectors corresponding to the plurality of first users, to obtain one or more vector clusters and a center vector of each vector cluster;
a first determining unit configured to determine one or more information clusters respectively corresponding to the one or more vector clusters, wherein each information cluster is determined based on a list of browsed information corresponding to a first vector in the vector cluster that corresponds to the information cluster;
a second obtaining unit configured to obtain a list of browsed information of a second user in response to a browsing request of the second user;
a second determining unit configured to determine, in response to determining that the list of browsed information of the second user is not empty, a second vector corresponding to the list of browsed information of the second user;
a third determining unit configured to calculate a similarity between the second vector and each center vector, to determine an information cluster matched with the second vector; and
a recommendation unit configured to provide recommendations for the second user based on the determined information cluster.

7. The apparatus according to claim 6, wherein the recommendation unit comprises:
a third obtaining unit configured to obtain the list of browsed information of the first user that corresponds to the determined information cluster; and
a fourth determining unit configured to determine, based on the obtained list of browsed information of the first user, a predetermined number of pieces of information that have been browsed a maximum number of times, to provide recommendations for the second user based on the predetermined number of pieces of information.

8. The apparatus according to claim 6, wherein the first user is determined based on the following steps: sorting users in descending order of numbers of pieces of information that have been browsed by the users within a preset time period, to determine a top preset percentage of users as the first users.

9. The apparatus according to claim 6, further comprising:
a fifth determining unit configured to determine, in response to determining that the list of browsed information corresponding to the second user is empty, the number of information browsing times that corresponds to each of the one or more information clusters; and
a sixth determining unit configured to determine the information cluster with a maximum number of information browsing times, to provide recommendations for the second user based on the determined information cluster.

10. The apparatus according to claim 6, wherein the list of browsed information comprises an information identifier of information that has been browsed by a corresponding user.

11. An electronic device, comprising:
at least one processor; and
a memory communicatively connected to the at least one processor, wherein
the memory stores instructions executable by the at least one processor, and the instructions, when executed by the at least one processor, cause the at least one processor to perform the method according to any one of claims 1 to 5.

12. A non-transitory computer-readable storage medium storing computer instructions, wherein the computer instructions are used to cause the computer to perform the method according to any one of claims 1 to 5.

13. A computer program product, comprising a computer program, wherein when the computer program is executed by a processor, the method according to any one of claims 1 to 5 is implemented.
